# EUROPÄISCHE PATENTSCHRIFT

(11) **EP 0 613 315 B1**
(45) Veröffentlichungstag und Bekanntmachung des Hinweises auf die Patenterteilung: **24.02.1999**
(21) Anmeldenummer: 93120466.3
(22) Anmeldetag: 18.12.1993
(51) Int. Cl.: H04Q 11/00

(54) **Anordnung und Verfahren zur leitungsgebundenen digitalen Nachrichtenübertragung**
Device and procedure for line data transmission
Dispositif et procédé pour la transmission de données par une ligne

(30) Priorität: 24.02.1993 DE 4305599
(43) Veröffentlichungstag der Anmeldung: 31.08.1994
(73) Patentinhaber: ALCATEL, 75008 Paris (FR)
(72) Erfinder: Still, Michael, D-30851 Langenhagen (DE); Chahabadi, Ziaedin, Dr., D-31848 Bad Münder (DE)
(74) Vertreter: Döring, Roger, Dipl.-Ing.

(56) Entgegenhaltungen:
- EP-A- 0 421 602
- US-A- 5 014 315
- US-A- 5 153 763
- IEEE COMMUNICATIONS MAGAZINE, Bd.29, Nr.3, März 1991, PISCATAWAY, NJ US Seiten 84 - 90, XP000225353 J.L.SPENCER ET AL. 'Establishing Reliability and Availability Criteria for Fiber-in-the-Loop systems'
- GLOBECOM'89; SESSION 37, PAPER 4;, Bd.3, 27. November 1989, DALLAS, US: Seiten 1320 - 1325, XP000144847 T.ROWBOTHAM ET AL. 'Plans for the Bishops Stortford (UK) Fibre to the Home Trials'
- NACHRICHTENTECHNISCHE BERICHTE, Nr.9, April 1992, BACKNANG DE Seiten 94 - 102, XP000331869 R.FEIGEL ET AL. 'FAST - ein Lichtwellenleiter-Pilotsystem für den Teilnehmeranschlussbereich'
- PROCEEDINGS OF THE NATIONAL COMMUNICATIONS FORUM, Bd.45, 30. September 1991, OAK BROOK, ILLINOIS US Seiten 408 - 414, XP000267450 M.E.BURRAGE 'Some Architectural Evolution Options for Fiber in the Loop'

## Beschreibung

Die Erfindung bezieht sich auf eine Anordnung zur leitungsgebundenen digitalen Nachrichtenübertragung zwischen einer Vermittlungsstelle eines Fernmeldenetzes und mit derselben verbundenen Teilnehmern, bei welcher die Nachrichten zwischen der Vermittlungsstelle und mindestens zwei mit aktiven elektrischen Komponenten arbeitenden Endverzweigern als Signale in Übertragungskanälen über mindestens optische Übertragungselemente enthaltende Leitungen übertragen werden und bei welcher jeweils mindestens ein Teilnehmer über eine elektrische Leitung mit einem Endverzweiger verbunden ist (DE-Z "ANT Nachrichtentechnische Berichte", Nr. 9, April 1992, Seiten 94 bis 102).

In Fernmeldenetzen werden die herkömmlichen Kupferkabel in immer stärkerem Maße durch optische Kabel mit Lichtwellenleitern - im folgenden kurz als "LWL" bezeichnet - ersetzt. Begonnen wurde damit zunächst im Fernnetz. Anschließend wurde auf das Ortsnetz übergegangen. Das erklärte Ziel besteht darin, die LWL als Übertragungsmedium optischer Signale auch im Teilnehmeranschlußbereich, also im Anschlußleitungsnetz, einzusetzen und damit nach Möglichkeit bis zu jedem einzelnen Teilnehmer zu führen (Fibre to the home). Mittels der LWL sollen die mit diesem Übertragungsmedium möglichen hohen Übertragungsraten den Teilnehmern zur Verfügung gestellt werden. Die bisher separaten Anschlußleitungen für die unterschiedlichen Dienste können dabei durch nur einen LWL-Anschluß ersetzt werden. Diese Dienste umfassen heute u. a. Telefon, Telefax, Telex, Teletex, IDN und ISDN (Basis- und Primärmultiplexanschlüsse). Für ein solches Anschlußleitungsnetz werden geeignete Geräte, insbesondere bei den Teilnehmern, und preiswerte Glasfaser-Übertragungssysteme benötigt.

Ein derartiges Anschlußleitungsnetz ist unter der Bezeichnung "Opal" beispielsweise in der DE-Z "ntz" Bd. 45 (1992) Heft 11, Seiten 902 und 903 für ein Pilotprojekt der DBP Telekom beschrieben. Es sind darin einige ausgewählte Teilnehmer über Glasfasern bzw. LWL mit einer Vermittlungsstelle verbunden. Dabei ist von der Vermittlungsstelle ausgehend ein LWL bis zu einem passiven optischen Verteiler geführt, von dem aus LWL zu fünf Teilnehmern und zu einem Kabelabzweiger weitergeführt sind. In diesem passiven Anschlußleitungsnetz wird die Lichtleistung je nach Anzahl der Teilnehmer aufgeteilt, was zu einer Beschränkung der Teilnehmeranzahl führt. Es müssen angepaßte Laser für Lichtwellenlängen von beispielsweise 1330 nm oder 1550 nm verwendet werden. Die Reichweite der Übertragung und die Übertragungsraten sind wegen des passiven Verteilers stark begrenzt.

Aus der US-A-5 014 315 geht ein digitales Telefonsystem hervor, bei dem an eine Vermittlungsstelle mindestens ein mit aktiven elektrischen Komponenten arbeitender Konzentrator über mindestens eine elektrische Übertragungselemente enthaltende Leitung angeschlossen ist. Mit dem Konzentrator sind Endverzweiger über jeweils mindestens eine elektrische Übertragungselemente enthaltende Leitung verbunden. Die Übertragungskanäle werden im Kabelverzweiger und in den Endverzweigern mit deren Komponenten in der einen Richtung aufgeteilt und in der anderen Richtung zusammengefaßt.

Die US-A-5 153 763 beschreibt ein Netzwerk für Fernsehsignale (CATV), bei welchem an eine Vermittlungsstelle mindestens ein mit aktiven elektrischen Komponenten arbeitender Kabelverzweiger über mindestens eine optische Übertragungselemente enthaltende Leitung angeschlossen ist. Mit dem Kabelverzweiger sind Endverzweiger über jeweils mindestens eine elektrische Übertragungselemente enthaltende Leitung verbunden. Die Übertragungskanäle werden im Kabelverzweiger und in den Endverzweigern mit deren aktiven Komponenten in der einen Richtung aufgeteilt.

Die gleiche Problematik wie bei dem oben geschilderten Anschlußleitungsnetz "Opal" gilt für die in der eingangs erwähnten DE-Z "ANT Nachrichtentechnische Berichte" beschriebene Anordnung. Es handelt sich dabei um ein passives LWL-Ortsnetz (OPAL 6), bei dem die Teilnehmer über Kupferadern an als Teilnehmer-Gruppen-Anschalte-Einheiten bezeichnete Endverzweiger angeschlossen sind. Zwischen der Vermittlungsstelle und den Endverzweigern ist ein Doppelfasersystem angeordnet. Zum Aufteilen der Fasern sind passive Schmelzkoppler (Splitter) in das Doppelfasersystem eingebaut.

Der Erfindung liegt die Aufgabe zugrunde, die eingangs geschilderte Anordnung sowie das entsprechende Verfahren so zu gestalten, daß die Vorteile der Nachrichtenübertragung mit hoher Übertragungsrate und großer Reichweite mit wirtschaftlich vertretbarem Aufwand auch im Anschlußleitungsnetz ausgenutzt werden können.

Diese Aufgabe wird gemäß der Erfindung dadurch gelöst,
- daß an die Vermittlungsstelle mindestens ein mit aktiven elektrischen Komponenten arbeitender Kabelverzweiger über mindestens eine optische und/oder elektrische Übertragungselemente enthaltende Leitung angeschlossen ist, mit dem die Endverzweiger über jeweils mindestens eine optische und/oder elektrische Übertragungselemente enthaltende Leitung verbunden sind,
- daß die aktiven elektrischen Komponente im Kabelverzweiger und in den Endverzweigern geeignet sind die Übertragungskanäle in der einen Richtung aufzuteilen und in umgekehrter Richtung zusammenzufassen und
- daß sowohl im Kabelverzweiger und/oder in der Vermittlungsstelle als auch in den Endverzweigern jeweils ein Kanalzuordner angebracht ist, der geeignet ist die Anzahl der Übertragungskanäle jedem Teilnehmer zuzuteilen und die Übertragungskanäle zu den Teilnehmern aufzuteilen und in umgekehrter Richtung zusammenzufassen.

Mit dieser Anordnung ist ein aktives Anschlußleitungsnetz (Doppelstern) geschaffen, bei dem die Anzahl der Teilnehmer keiner Beschränkung unterliegt. Wenn zwischen der Vermittlungsstelle und dem Kabelverzweiger sowie zwischen dem Kabelverzweiger und den Endverzweigern LWL eingesetzt werden, findet an keiner Stelle eine Aufteilung der Lichtleistung statt. Jeder Teilnehmer wird unabhängig von den anderen Teilnehmern mit hoher Übertragungsrate und hoher Leistung versorgt. Diese Anordnung hat dementsprechend eine hohe Grundreichweite und eine hohe Grundkapazität. Sie bietet die einfache Möglichkeit der Erweiterung zur Schaffung eines wirtschaftlichen, hybriden Netzes. Sie ist dadurch sowohl für dicht- als auch für dünnbesiedelte Anschlußbereiche geeignet. Die Anordnung kann auch für die Erweiterung bereits bestehender Netze verwendet werden.

Die Endverzweiger können beispielsweise jeweils im Gebäude eines Teilnehmers oder mehrerer Teilnehmer installiert werden. Von dort aus gehen nur noch kurze elektrische Leitungen zu den Geräten der Teilnehmer. Diese Anordnung ist mit heute vorhandenen Mitteln ohne großen Aufwand im Anschlußleitungsnetz realisierbar. Sie kann daher sofort eingesetzt werden, zumal in den Räumlichkeiten der Teilnehmer selbst keine wesentlichen Änderungen durchgeführt werden müssen. Die Anordnung ist betriebssicher, da der Ausfall eines Teilnehmers sich auf die anderen Teilnehmer nicht auswirkt. Da die Kanäle den einzelnen Teilnehmern genau zugeordnet werden, ist auch der Datenschutz gewährleistet.

Die Vorteile der LWL mit der Möglichkeit einer breitbandigen Übertragung mit hohen Übertragungsraten können bei dieser Anordnung so weit wie möglich ausgenutzt werden. Neben den hohen Übertragungsraten kann auch die Reichweite der Übertragung wesentlich erhöht werden. Die von den Endverzweigern zu den Geräten der Teilnehmer führenden elektrischen Leitungen sind so kurz, daß jedem Teilnehmer problemlos Kanäle mit einer Übertragungsrate von mindestens 2 Mbit/s angeboten und durchgeschaltet werden können. Damit ist für jeden Teilnehmer die Möglichkeit gegeben, weitere oder andere Dienste einfach und schnell ausnutzen zu können. Die entsprechende Zu- und Durchschaltung kann vom Betreiber des Netzes durch ein Managementsystem in kürzester Zeit vorgenommen werden.

Das zugehörige Verfahren arbeitet für die im Normalfall längere Strecke zwischen Vermittlungsstelle und Kabelverzweiger beim Einsatz von LWL vorzugsweise mit hochwertigen Laserdioden, so daß eine einwandfreie Übertragung der Signale mit entsprechender Reichweite sichergestellt werden kann. Die Übertragung erfolgt zwischen Vermittlungsstelle und Kabelverzweiger beispielsweise mit einer Übertragungsrate im Bereich von 100 Mbit/s, vorzugsweise mit 140 Mbit/s oder 155 Mbit/s. Es sind jedoch auch niedrigere oder höhere Übertragungsraten möglich. Die Kanäle werden im Kabelverzweiger auf die angeschlossenen Endverzweiger aufgeteilt. Da hier jeweils nur relativ kurze Strecken von beispielsweise 2 km bis 5 km zwischen Kabelverzweiger und Endverzweigern zu überbrücken sind, können im Fall der optischen Übertragung auch optische Sender eingesetzt werden, an deren Lichtleistung keine allzu großen Anforderungen gestellt werden. Solche Sender sind beispielsweise Lumineszenzdioden oder Laserdioden, wie sie in CD-Abspielgeräten eingesetzt werden. Diese Bauteile werden in großen Stückzahlen hergestellt. Sie sind daher relativ preiswert. Die Übertragung zwischen Kabelverzweiger und Endverzweigern erfolgt beispielsweise mit einer Übertragungsrate im Bereich von 10 Mbit/s.

Den Teilnehmern werden von den Endverzweigern aus über elektrische Leitungen beispielsweise 40 Kanäle zu je 64 kbit/s, mindestens jedoch 2 Mbit/s zur Verfügung gestellt. Die Kanäle werden den Teilnehmern von im Kabelverzweiger und in den Endverzweigern befindlichen Kanalzuordnern zugeordnet. Sie sind nach Installation dieser Anordnung bei den Teilnehmern verfügbar und können im Bedarfsfall durchgeschaltet werden.

In bevorzugter Ausführungsform werden dazu bei den Teilnehmern Übergabepunkte eingerichtet, die mit den Endverzweigern über elektrische Leitungen verbunden sind, vorzugsweise über Vierdrahtleitungen. Von diesen Übergabepunkten gehen Busleitungen aus, an welche die Teilnehmer Geräte für unterschiedliche Dienste anschließen können. Dazu wird jeweils nur ein Adapter benötigt, der auf der Geräteseite die für das jeweilige Gerät spezifische Schnittstelle zur Verfügung stellt. Entsprechende Wandler oder Einheiten mit derartigen Schnittstellen können dann in den Endverzweigern entfallen.

Zwischen dem Kabelverzweiger und jedem angeschlossenen Endverzweiger liegt vorzugsweise ein Hybridkabel mit mindestens einem LWL und einem elektrischen Aderpaar. Durch dieses Aderpaar kann die Stromversorgung der Endverzweiger und der Teilnehmer vom Kabelverzweiger aus zentral erfolgen.

Weitere vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:

Fig. 1 ein schematisches Blockschaltbild einer Anordnung nach der Erfindung.

Fig. 2 eine Einzelheit der Anordnung nach Fig. 1 für einen Teilnehmer.

An die Vermittlungsstelle VST eines Fernmeldenetzes ist ein Kabelverzweiger KVZ über eine Leitung L1 angeschlossen, die optische und/oder elektrische Übertragungselemente enthält. Vorzugsweise wird zwischen der VST und dem KVZ eine Leitung L1 mit LWL verwendet. Das wird in der folgenden Beschreibung auch so berücksichtigt. Wenn die Leitung L1 zwei LWL enthält kann auf Maßnahmen zur Richtungstrennung verzichtet werden. Der LWL der Leitung L1 ist an beiden Enden mit einem Leitungsabschluß LT verbunden. Neben anderen Bauteilen sind in den LT elektro/optische Wandler vorhanden. In dem LT der VST wird beispielsweise ein 140 Mbit/s-Multiplexsignal gebildet und in ein optisches Leitungssignal umgewandelt, das über die Leitung L1 übertragen wird. Der LT im KVZ realisiert die optisch/elektrische Wandlung des 140 Mbit/s-Empfangssignals und demultiplext dasselbe. An die VST ist eine beliebige Anzahl von KVZ angeschlossen.

Im KVZ, der als aktiver Kabelverzweiger mit aktiven, elektrisch arbeitenden Komponenten bestückt ist, befindet sich ein Kanalzuordner KK, der mindestens zwei Ausgänge zum Anschluß von Endverzweigern EVZ aufweist. Die Ausgänge des KK sind wieder zu Leitungsabschlüssen LT geführt. Der KVZ ist mit den EVZ jeweils über eine Leitung L2 verbunden, die optische und/oder elektrische Übertragungswege enthält. Wenn die Leitung L2 nur zur Übertragung optischer Signale dient, werden vorzugsweise wieder jeweils zwei LWL eingesetzt. Für eine rein elektrische Signalübertragung ist in der Leitung L2 mindestens ein Aderpaar mit Kupferleitern vorhanden. Der KVZ ist außerdem mit einer Stromversorgung SV zur Versorgung seiner elektrischen Komponenten ausgerüstet. Als SV kann das 230 V-Wechselstromnetz mit und ohne Batterie-Pufferung verwendet werden.

In den EVZ sind die LWL der Leitungen L2 wieder an Leitungsabschlüsse LT angeschlossen. Auch die EVZ sind als aktive Endverzweiger mit aktiven, elektrisch arbeitenden Komponenten ausgerüstet. Sie weisen jeweils einen Kanalzuordner KE auf, an den eine Anzahl von Teilnehmern Tln angeschlossen ist. An jeden EVZ ist mindestens ein Tln angeschlossen. Jeder EVZ ist in räumlicher Nähe mindestens eines Tln aufgebaut. Vom EVZ führen dann elektrische Leitungen zu den Tln, die wegen der räumlichen Nähe kurz gehalten werden können.

Jeder Tln ist mit einem EVZ über mindestens ein elektrisches Aderpaar verbunden. Vorzugsweise werden jeweils zwei Aderpaare eingesetzt. Auf Maßmahmen zur Richtungstrennung, bspw. Echokompensation, kann dann wieder verzichtet werden.

In den Leitungen L2 zwischen dem KVZ und den EVZ sind in bevorzugter Ausführungsform LWL und elektrische Leitungen gemeinsam angeordnet. Die Leitungen L2 sind dann als Hybridleitungen ausgeführt. Es bietet sich dadurch die Möglichkeit, die elektrischen Komponenten der EVZ und - soweit erforderlich - auch die Geräte der Tln, über die elektrischen Leitungen zentral aus der SV des KVZ zu speisen. Das gilt auf jeden Fall für die analogen Telefonanschlüsse, aber auch für den Notbetrieb anderer Geräte. Diese Stromversorgung ist auch dann gegeben, wenn die Leitungen L2 nur elektrische Leiter enthalten oder wenn für die Leitungen L2 Leitungen mit LWL und mit elektrischen Leitern als getrennte Leitungen verwendet werden.

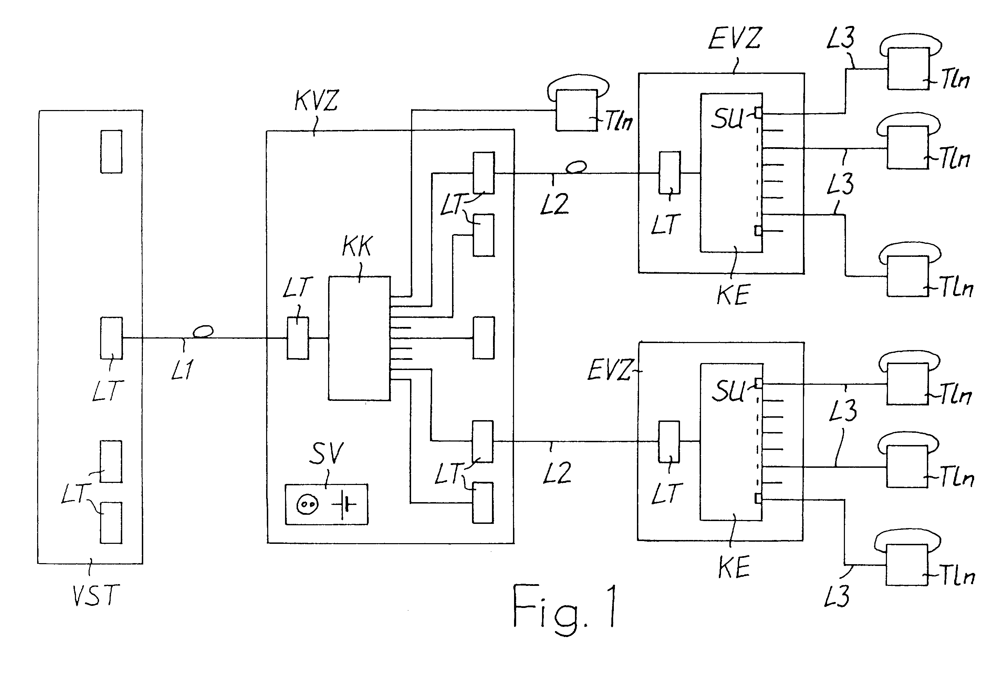

Die Tln können bei entsprechend räumlicher Nähe mittels einer elektrischen Leitung auch direkt an den KK des KVZ angeschlossen werden. Das ist in Fig. 1 für einen Tln eingezeichnet.

Die Übertragung digitaler nachrichtentechnischer Signale mit einer Anordnung nach Fig. 1 geschieht beispielsweise wie folgt: Über den LWL der Leitung L1 werden die digitalen Signale mit möglichst hoher Übertragungsrate übertragen. Die Übertragungsrate liegt beispielsweise im Bereich von 100 Mbit/s. Vorzugsweise werden Übertragungsraten von 140 Mbit/s oder 155 Mbit/s eingesetzt. In den LT der VST und des KVZ werden vorzugsweise hochwertige Laserdioden als Sender und entsprechend hochwertige Empfangsdioden verwendet. Für den LWL der Leitung L1 wird eine Monomodefaser eingesetzt. Es ist damit insgesamt sichergestellt, daß die Signale mit der angegebenen hohen Übertragungsrate zwischen der VST und dem KVZ einwandfrei übertragen werden können. Das gilt nicht nur für die bisher im Anschlußleitungsnetz üblichen Entfernungen. Es sind vielmehr ohne den Einsatz von zusätzlichen bzw. speziellen (optischen) Verstärkern größere Entfernungen zwischen der VST und dem bzw. den KVZ überbrückbar. Die Anzahl der VST eines Netzes kann daher vermindert werden.

Die zwischen der VST und dem KVZ als optische Signale übertragenen Kanäle werden im KVZ entsprechend der Anzahl und dem Bedarf der angeschlossenen EVZ aufgeteilt. Für die Übertragung der Signale zwischen dem KVZ und den EVZ als optische Signale können in den jeweiligen LT preiswertere optische Sender und Empfänger eingesetzt werden. Als Sender eignen sich beispielsweise Lumineszenz- und Laserdioden mit einer Wellenlänge von etwa 780 nm. Für relativ kurze Übertragungsstrecken von 2 bis 5 km zwischen dem KVZ und den EVZ ist auch bei Verwendung derartiger Bauteile eine einwandfreie Übertragung der Signale mit einer Übertragungsrate von beispielsweise 10 Mbit/s sichergestellt. Bei längeren Übertragungsstrecken werden auch zwischen KVZ und EVZ hochwertige Bauteile eingesetzt.

Die Tln sind über elektrische Leitungen L3 mit den EVZ bzw. deren KE verbunden. Da die EVZ jeweils in räumlicher Nähe mindestens eines Tln installiert werden, ist sichergestellt, daß die elektrischen Leitungen L3 so kurz sind, daß die digitalen Signale mit der gewünschten Übertragungsrate von etwa 2 Mbit/s störungsfrei übertragen werden können.

In bevorzugter Ausführungsform werden jedem an einen EVZ angeschlossenen Tln 40 Kanäle zu je 64 kbit/s zur Verfügung gestellt. Das entspricht einer Übertragungsrate von 2,56 Mbit/s, die ein Tln maximal ausnutzen könnte, wenn er eine entsprechende Anzahl der angebotenen Dienste benutzen will. Diese Übertragungsrate steht jedem Tln an einem Service-Unit SU zur Verfügung, der im EVZ angeordnet ist und an den der Tln angeschlossen ist. In jedem EVZ ist für jeden Tln ein SU vorhanden. Jeder der im EVZ vorhandenen SU erhält durch Adressierung Zugriff zu den jeweils zugeteilten Timeslots eines 2,56 Mbit/s-Datenbusses. Der SU wandelt dieselben in entsprechende teilnehmerseitige Schnittstellensignale.

In einer bevorzugten Ausführungsform ist es auch möglich, die EVZ ohne SU lediglich als Netzabschluß, beispielsweise als optischer Netzabschluß, auszuführen, von dem zu einzelnen Tln oder zu mehreren Tln eines Gebäudes eine elektrische Leitung L4 bis zu einem Übergabepunkt P führt. Die elektrischen Leitungen L4 sind vorzugsweise als Vierdrahtleitungen ausgeführt. Diese Ausführungsform der Anordnung zur digitalen Nachrichtenübertragung bietet den Vorteil, daß mit nur zwei elektrischen Aderpaaren den Tln eine Vielzahl unterschiedlicher Dienste unabhängig voneinander und auch nacheinander zur Verfügung gestellt werden kann, ohne daß dafür weitere Leitungen oder Rangierarbeiten für neu hinzukommende Dienste erforderlich sind.

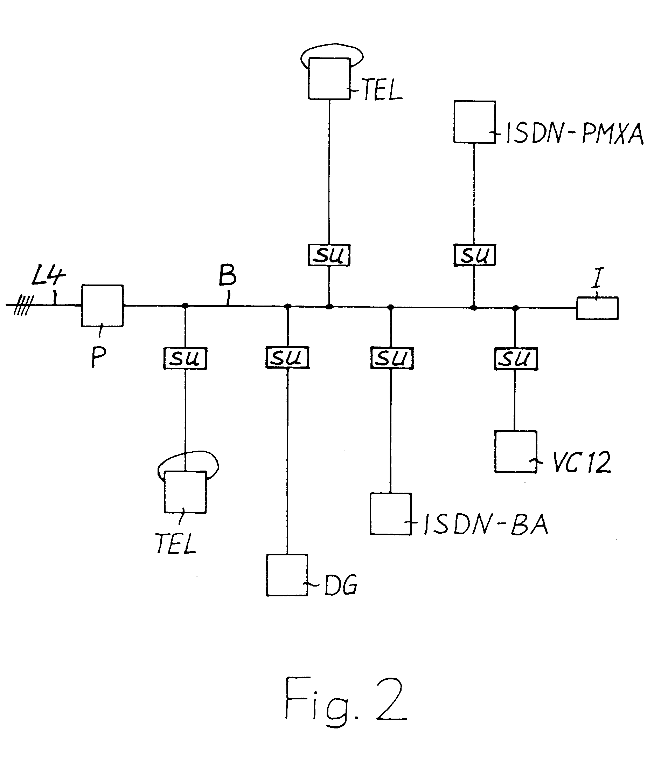

Dazu geht entsprechend Fig. 2 vom Übergabepunkt P für einen Tln beispielsweise eine mit ihrer Impedanz I abgeschlossene Busleitung B - im folgenden "Bus B" genannt - aus. An den Bus B kann jeder Tln Geräte für unterschiedliche Dienste parallel zueinander anschließen. Er benötigt dazu jeweils einen Adapter, der als SU die jeweils erforderliche Schnittstelle zur Verfügung stellt. In der überwiegenden Anzahl werden die Tln zunächst nur einen Anschluß für ein analoges Telefon TEL haben. Das TEL ist mit einem entsprechenden SU (Adapter) an den Bus B angeschlossen und dadurch über den Übergabepunkt p mit der VST verbunden. Für diesen Anschluß reicht i. w. ein Kanal mit einer Übertragungsrate von 64 kbit/s aus. Weitere Geräte bzw. Endeinrichtungen können mit einem jeweils passenden SU parallel zueinander an den Bus B angeschlossen werden. Solche Geräte sind beispielsweise weitere TEL, Datengeräte DG, ISDN-Basisanschluß ISDN-BA, ISDN-Primärmultiplexanschluß ISDN-PMXA und auch Anschlüsse für VC12, so wie es in Fig. 2 dargestellt ist. Die zum Betrieb dieser Geräte benötigten Übertragungsraten bzw. Kanäle stehen am Übergabepunkt P grundsätzlich zur Verfügung. Sie müssen nur im Bedarfsfall durchgeschaltet werden.

Diese Durchschaltung wird über den KK des KVZ und den KE des EVZ durchgeführt, an den der Tln bzw. dessen Übergabepunkt P angeschlossen ist, der ein zusätzliches Gerät bzw. zusätzliche Geräte anschließen will. Der dafür erforderliche Steuerbefehl kann von der VST übertragen werden. Um das im Bedarfsfall erreichen zu können, braucht der Tln lediglich bei einer dafür vorgesehenen Stelle des Netzbetreibers einen für das jeweilige Gerät geeigneten Adapter mit dem spezifischen SU zu erwerben und in seinen Räumen an den Bus B anzuschließen. Die Durchschaltung des zusätzlichen Kanals bzw. zusätzlicher Kanäle kann während der Zeit erledigt werden, die der Tln bzw. eine entsprechende Person benötigt, um nach dem Erwerb des Adapters zu seinen Räumlichkeiten zu gelangen.

Ein Tln kann auf diese Weise so viele Dienste mit entsprechenden Geräten in Anspruch nehmen, wie die am Übergabepunkt P abgreifbare Kanalanzahl bzw. Übertragungsrate es zulassen. Die insgesamt ausnutzbare Übertragungsrate für alle an einen EVZ angeschlossenen Tln ist durch die Übertragungsrate zwischen dem EVZ und dem KVZ begrenzt. Statt des KK im KVZ könnte auch ein Kanalzuordner in der VST vorhanden sein. Es können auch sowohl im KVZ als auch in der VST Kanalzuordner angebracht werden.

Die Anordnung gemäß den Fig. 1 und 2 bietet noch den Vorteil, daß eine Überprüfung der Übertragungswege und der Funktionsfähigkeit aller eingesetzten Bauteile bzw. Komponenten von der VST her mit einem entsprechend aufgebauten und integrierten digitalen Kanal möglich ist. Dazu kann für die Schleifenprüfung jeweils in den Übergabepunkten P der Tln eine Verbindung der Übertragungswege durchgeführt werden.

Der Vollständigkeit halber wird darauf hingewiesen, daß die angegebenen Übertragungsraten zwischen der VST und dem KVZ einerseits sowie dem KVZ und den EVZ andererseits nur eine Größenordnung darstellen. Sie können - je nach Bedarf - auch höher oder niedriger sein. Das gilt grundsätzlich auch für die den Tln insgesamt zuführbare Übertragungsrate.

## Patentansprüche

1. Anordnung zur leitungsgebundenen digitalen Nachrichtenübertragung zwischen einer Vermittlungsstelle (VST) eines Fernmeldenetzes und mit derselben verbundenen Teilnehmern (Tln), bei welcher die Nachrichten zwischen der Vermittlungsstelle (VST) und mindestens zwei mit aktiven elektrischen Komponenten arbeitenden Endverzweigern (EVZ) als Signale in Übertragungskanälen über mindestens optische Übertragungselemente enthaltende Leitungen (L1,L2) übertragen werden und bei welcher jeweils mindestens ein Teilnehmer(Tln) über eine elektrische Leitung (L3) mit einem Endverzweiger (EVZ) verbunden ist, dadurch gekennzeichnet,
- daß an die Vermittlungsstelle (VST) mindestens ein mit aktiven elektrischen Komponenten arbeitender Kabelverzweiger (KVZ) über mindestens eine optische und/oder elektrische Übertragungselemente enthaltende Leitung (L1) angeschlossen ist, mit dem die Endverzweiger (EVZ) über jeweils mindestens eine optische und/oder elektrische Übertragungselemente enthaltende Leitung (L2) verbunden sind,
- daß die aktiven elektrischen Komponente im Kabelverzweiger (KVZ) und in den Endverzweigern (EVZ) geeignet sind, die Übertragungskanäle in der einen Richtung aufzuteilen und in umgekehrter Richtung zusammenzufassen und
- daß sowohl im Kabelverzweiger (KVZ) und/oder in der Vermittlungsstelle (VST) als auch in den Endverzweigern (EVZ) jeweils ein Kanalzuordner (KK,KE) angebracht ist, der geeignet ist, die Anzahl der Übertragungskanäle jedem Teilnehmer (Tln) zuzuteilen und die Übertragungskanäle zu den Teilnehmern (Tln) aufzuteilen und in umgekehrter Richtung zusammenzufassen.

2. Anordnung nach Anspruch 1, dadurch gekennzeichnet, daß von einem Endverzweiger (EVZ) zu mindestens einem Teilnehmer (Tln) eine elektrische Leitung (L4) bis zu einem Übergabepunkt (P) führt, von dem eine Busleitung (B) ausgeht, an die unterschiedliche Geräte eines Teilnehmers (Tln) unter Zwischenschaltung von Service-Units (SU) parallel zueinander anschließbar sind, die geeignet sind, für das jeweilige Gerät bestimmte Schnittstellensignale zu liefern.

3. Anordnung nach Anspruch 2, dadurch gekennzeichnet, daß für die elektrische Leitung (L4) zwischen einem Endverzweiger (EVZ) und dem Übergabepunkt (P) eine Vierdrahtleitung eingesetzt wird.

4. Anordnung nach einem der Ansprüche 1 bis 3, dadurch gekennzeichnet, daß im Kabelverzweiger (KVZ) eine Stromversorgung (SV) angeordnet ist, die zur Versorgung der eigenen Geräte sowie gleichzeitig zur Versorgung der Geräte der Endverzweiger (EVZ) und zumindest der Telefone (TEL) der Teilnehmer (Tln) eingesetzt ist, wobei zwischen dem Kabelverzweiger (KVZ) und den Endverzweigern (EVZ) jeweils eine Leitung (L2) eingesetzt ist, die mindestens ein elektrisches Aderpaar hat.

5. Verfahren zur digitalen Nachrichtenübertragung mit einer Anordnung nach einem der Ansprüche 1 bis 4, dadurch gekennzeichnet,
- daß die Signale zwischen Vermittlungsstelle (VST) und Kabelverzweiger (KVZ) mit einer Übertragungsrate im Bereich von 100 Mbit/s, vorzugsweise mit 140 Mbit/s oder 155 Mbit/s, übertragen werden,
- daß die Signale zwischen Kabelverzweiger (KVZ) und Endverzweigern (EVZ) mit einer Übertragungsrate von etwa 10 Mbit/s übertragen werden und
- daß jedem über die elektrischen Leitungen (L3,L4) mit einem Endverzweiger (EVZ) verbundenen Teilnehmer (Tln) eine Übertragungsrate von mindestens 2 Mbit/s zur Verfügung gestellt wird.

6. Verfahren nach Anspruch 5, dadurch gekennzeichnet, daß die im Kabelverzweiger (KVZ) und in den Endverzweigern (EVZ) angeordneten Kanalzuordner (KK,KE) von der Vermittlungsstelle (VST) aus gesteuert werden.

## Claims

1. Arrangement for the transmission by wire of digital communications between a switching centre (VST) of a telecommunications network and the subscribers (Tln) connected to same in which the messages are transmitted between the communications centre (VST) and at least two terminal blocks (EVZ) operating with active electrical components as signals in transmission channels over lines (L1, L2) comprising at least optical transmission elements and in which, in each case, at least one subscriber (Tln) is connected by an electrical line (L3) with a terminal block (EVZ) characterised in that:
- at the switching centre (VST) at least one cable terminal (KVZ) operating with active electrical components is connected by way of a line (L1) containing at least one optical and/or electrical transmission element, to which the terminal block (EVZ) is connected by means of a line (L2) containing at least one optical and/or electrical transmission element,
- that the active electrical components in the cable branch box (KVZ) and in the terminal blocks (EVZ) are adapted to separate the transmission channels in one direction and to combine them in the other direction and
- that both in the cable branch box (KVZ) and/or in the switching centre (VST) as well as in the terminal blocks (EVZ) a channel allocator (KK, KE) is provided which is adapted to combine the number of transmission channels for each subscriber (Tln) and to separate the transmission channels to the subscribers (Tln) and to combine them in the reverse direction.

2. Arrangement in accordance with claim 1 characterised in that an electrical line (L4) from a terminal (EVZ) to at least one subscriber (Tln) leads to a transfer point (P) from which a bus (B) leads to which a subscriber's (Tln) various equipment can be connected in parallel with the insertion of service units (SU) adapted to provide interface signals for each item of equipment.

3. Arrangement in accordance with claim 2 characterised in that a four line wire is used for the electrical line (L4) between a terminal block (EVZ) and the transfer point (P).

4. Arrangement in accordance with claims 1 - 3 characterised in that a power supply (SV) is arranged in the cable branch box (KVZ) which is employed to supply its own equipment as well as simultaneously to supply the equipment of the terminal (EVZ) and at least the subscribers (Tln) telephone (TEL), where between the cable branch box (KVZ) and the terminal block (EVZ) a line (L2) is employed which has at least one pair of electrical conductors.

5. Method for the digital transmission of messages with an arrangement as in one of the claims 1 - 4 characterised in that
- the signal between the switching centre (VST) and cable branch box (KVZ) is transmitted at a transmission rate in the range of 100Mbit/s, preferably at 140Mbits/s or 155Mbit/s,
- the signals between the cable branch box (KVZ) and the terminal block (EVZ) are transmitted at a transfer rate of about 10Mbit/s and
- that each subscriber (Tln) connected by way of electrical lines (L3, L4) with a terminal block (EVZ) has available a transfer rate of at least 2 Mbit/s.

6. Method in accordance with claim 5 characterised in that the channel allocator (KK, KE) provided in the cable branch box (KVZ) and in the terminal block (EVZ) is controlled from the switching centre (VST).

## Revendications

1. Disposition destinée à la transmission d'informations numériques par câbles entre une station émettrice (VST) appartenant à un réseau de télécommunications et les abonnés (Tln) de ce même réseau, dans lequel les informations sont transmises entre la station émettrice (VST) et au moins deux répartiteurs d'extrémité (EVZ) mettant en oeuvre des composants électriques actifs, sous forme de signaux circulant dans des canaux de transmission par l'intermédiaire de câbles (L1, L2) comprenant au moins des éléments de transmission optiques et dans lequel à chaque fois au moins un abonné (Tln) est relié par un câble électrique (L3) à un répartiteur d'extrémité (EVZ) et caractérisé par le fait que :
- au moins une bifurcation de câble (KVZ) mettant en oeuvre des composants électriques actifs est reliée à la station émettrice (VST) par l'intermédiaire d'au moins un câble (L1) comportant des éléments de transmission optiques et/ou électriques, et à laquelle sont reliés les répartiteurs d'extrémités (EVZ) par l'intermédiaire d'au moins un câble (L2) comportant des éléments de transmission optiques et/ou électriques.
- les composants électriques actifs de la bifurcation de câble (KVZ) et des répartiteurs d'extrémité (EVZ) sont appropriés pour dissocier dans une direction et regrouper dans la direction opposée les canaux de transmission
- qu'aussi bien au niveau de la bifurcation de câble (KVZ) et/ou de la station émettrice (VST) qu'au niveau des répartiteurs d'extrémité (EVZ) à chaque fois un dispositif d'affectation des canaux approprié (KK, KE) est prévu pour diriger vers chaque abonné (Tln) le nombre de canaux de transmission nécessaire, pour répartir les canaux de transmission entre les abonnés (Tln) et en sens inverse pour les regrouper.

2. Disposition suivant la revendication 1 caractérisé par le fait qu'un câble électrique (L4) relie un répartiteur d'extrémité (EVZ) à au moins un abonné (Tln) au point de distribution (P) à partir duquel circule un câble de bus (B) permettant de connecter en parallèle les différents appareils d'un abonné (Tln), par la commutation intermédiaire d'une unité de service (SU) prévue pour établir l'interface nécessaire pour chaque appareil.

3. Disposition suivant la revendication 2, caractérisé par le fait que le câble électrique (L4) entre le répartiteur d'extrémité (EVZ) et un point de distribution (P) est composé d'un câble à quatre brins.

4. Disposition suivant les revendications 1 à 3 caractérisé par le fait que qu'une alimentation électrique (SV) est prévue dans la bifurcation de câble (KVZ) pour alimenter ses propres appareils ainsi que ceux du répartiteur d'extrémité (EVZ) et au moins le téléphone (TEL) de l'abonné (Tln), et pour laquelle un câble (L2) est disposé entre la bifurcation de câble (KVZ) et le répartiteur d'extrémité (EVZ) qui comporte au moins une paire de brins électriques.

5. Procédé de transmission d'informations numériques selon une des disposition des revendications 1 à 4 caractérisé par le fait que
- les signaux entre la station émettrice (VST) et la bifurcation de câble (KVZ) sont transmis avec une vitesse de transmission de l'ordre de 100 Mbit/s et de préférence de 140 à 155 Mbit/s
- les signaux entre la bifurcation de câble (KVZ) et les répartiteurs d'extrémité (EVZ) sont transmis à une vitesse d'env. 10 Mbit/s
- chaque abonné (Tln) relié à un répartiteur d'extrémité (EVZ) par les câbles électriques (L3, L4) dispose d'une vitesse de transmission d'au moins 2 Mbit/s.

6. Procédé suivant la revendication 5, caractérisé par le fait que les dispositifs d'affectation des canaux (KK ou KE) placés au niveau des répariteurs d'extrémité (EVZ) et des bifurcations de câbles (KVZ) sont pilotés par la station émettrice (VST).
